# EUROPÄISCHE PATENTSCHRIFT

(11) **EP 2 337 710 B1**
(45) Veröffentlichungstag und Bekanntmachung des Hinweises auf die Patenterteilung: **01.08.2012**
(21) Anmeldenummer: 09744985.4
(22) Anmeldetag: 02.10.2009
(51) Int. Cl.: B60R 21/264

(54) **GASGENERATOR FÜR EIN AIRBAGMODUL**
GAS GENERATOR FOR AN AIRBAG MODULE
GÉNÉRATEUR DE GAZ POUR UN MODULE DE COUSSIN GONFLABLE

(30) Priorität: 08.10.2008 DE 102008050763
(43) Veröffentlichungstag der Anmeldung: 29.06.2011
(73) Patentinhaber: Takata AG, 63743 Aschaffenburg (DE)
(72) Erfinder: KRATZ, Heiko, 61476 Kronberg (DE); WINDHAUSEN, Björn, 75328 Schömberg (DE); MENZEL, Michael, 63110 Rodgau (DE)
(74) Vertreter: Müller, Wolfram Hubertus
(86) Internationale Anmeldenummer: PCT/EP2009/062830
(87) Internationale Veröffentlichungsnummer: WO 2010/040691

(56) Entgegenhaltungen:
- WO-A-2005/042310
- DE-A1- 4 417 347
- DE-A1- 19 802 355
- US-A- 5 738 373
- US-A- 6 007 098

## Beschreibung

Die Erfindung betrifft einen Gasgenerator gemäß dem Oberbegriff des Anspruchs 1 sowie ein Verfahren zur Herstellung eines Gasgenerators.

Ein derartiger Gasgenerator umfasst ein Gehäuse zum Tragen der Komponenten des Gasgenerators, insbesondere eines Treibstoffes zum Erzeugen eines Gases, mit dem ein Gassack eines Kraftfahrzeugairbagmoduls aufgeblasen werden kann, sowie einen im Gehäuse befestigten Filter zum Filtern des mit dem Gasgenerator erzeugbaren Gases, wobei jener Filter zum Kühlen des besagten Gases und / oder zum Zurückhalten (Filtern) von Schadstoffen ausgebildet sein kann, die bei der Verbrennung des besagten Treibstoffes entstehen.

Das Dokument DE 198 02 355 A1, zeigt einen gattungsbildenden Gasgenerator mit den Merkmalen des Oberbegriffes des Anspruchs 1. Der Erfindung liegt das Problem zugrunde, einen einfach und kostengünstig herzustellenden Gasgenerator sowie ein entsprechendes Verfahren zur Herstellung eines solchen Gasgenerators bereitzustellen.

Dieses Problem wird durch einen Gasgenerator mit den Merkmalen des Anspruchs 1 gelöst.

Danach ist vorgesehen, dass zum Befestigen des Filters am Gehäuse des Gasgenerators ein Teil des Gasgenerators in eine Ausnehmung des Filters eingeführt ist.

Bevorzugt ist jenes im Gehäuse angeordnete Teil des Gasgenerators in jene Ausnehmung eingepresst, so dass der Filter im Querschnitt aufgeweitet wird und daher von einem durch das Gehäuse definierten Innenraum des Gehäuses her gegen das Gehäuse gedrückt wird. Hierdurch wird der Filter im Gehäuse festgelegt.

Somit kann der Gasgenerator weiterhin mit Vorteil mit Hilfe eines O-Ringes abgedichtet werden, da keinerlei Beschädigung einer dem Innenraum des Gehäuses zugewandten Innenseite des Gehäuses stattfindet, wie zum Beispiel beim Verkrimpen eines Filters mit dem Gehäuse.

Vorzugsweise umläuft der Filter das besagte Teil des Gasgenerators geschlossen ringförmig. Weiterhin ist bevorzugt jenes Teil des Gasgenerators als ein Bolzen ausgebildet, der insbesondere von einer im Gehäuse angeordneten Drossel des Gasgenerators absteht. Bevorzugt ist der Bolzen einstückig an die Drossel angeformt, so dass der Bolzen und die Drossel ein einheitliches Bauteil bilden.

Eine derartige Drossel wird insbesondere - vom Innenraum des Gehäuses her - vor einer Ausströmöffnung des Gasgenerators angeordnet und dient vorzugsweise zum Drosseln des durch den Gasgenerator erzeugten Gasstromes, sowie ggf. zum Lenken und / oder Verteilen des erzeugten Gases.

Das Gehäuse ist insbesondere entlang einer Erstreckungsrichtung längs erstreckt ausgebildet, wobei der Bolzen vorzugsweise entlang der Erstreckungsrichtung von der Drossel absteht.

Vorzugsweise handelt es sich bei dem Gasgenerator um einen sogenannten Rohrgasgenerator, d.h., das Gehäuse des Gasgenerators ist zumindest abschnittsweise, vorzugsweise über die gesamte Länge entlang der Erstreckungsrichtung, als ein Hohlzylinder mit einer mit der Erstreckungsrichtung zusammen fallenden Zylinderachse ausgebildet.

Bevorzugt ist die Ausnehmung des Filters, in die das Teil des Gasgenerators (Bolzen) eingeführt bzw. eingepresst wird, als eine Durchgangsöffnung ausgeformt, die insbesondere mit der Erstreckungsrichtung fluchtet, d.h., die Durchgangsöffnung hat die Gestalt einer zylinderförmigen Ausnehmung, deren Zylinderachse mit der Zylinderachse des Gehäuses zusammenfällt.

Bevorzugt ist der Filter zumindest abschnittsweise, vorzugsweise über seine gesamte Länge entlang der Erstreckungsrichtung, als ein Hohlzylinder ausgebildet. Dabei weist jener hohlzylindrische Abschnitt bzw. der Filter eine Zylinderachse auf, die mit der Zylinderachse des Gehäuses zusammenfällt.

In einer Ausführungsform der Erfindung ist vorgesehen, dass der Filter lediglich den Bolzen in einer quer zur Erstreckungsrichtung verlaufenden Ebene umgibt, d.h., geschlossen ringförmig umläuft, und zwar vorzugsweise über die gesamte Länge des Bolzens entlang der Erstreckungsrichtung des Bolzens.

In einer alternativen Ausführungsform der Erfindung ist vorgesehen, dass der Filter sowohl den Bolzen als auch die damit verbundende Drossel in einer quer zur Erstreckungsrichtung verlaufenden Ebene umgibt, und zwar bevorzugt auf einer gesamten Länge der Einheit Bolzen/Drossel entlang der besagten Erstreckungsrichtung.

Des Weiteren wird das erfindungsgemäße Problem durch ein Verfahren zur Herstellung eines Gasgenerators gelöst.

Das erfindungsgemäße Verfahren sieht die nachfolgenden Schritte vor:
- Bereitstellen eines Gehäuses des Gasgenerators, und
- Einführen eines Filters zum Filtern eines mit dem Gasgenerator erzeugbaren Gases in das Gehäuse des Gasgenerators derart, dass ein Teil des Gasgenerators in eine Ausnehmung des Filters eingeführt wird, insbesondere eingepresst wird, um den Filter am Gehäuse zu befestigen.

Vorzugsweise wird das besagte Teil des Gasgenerators zum Festlegen des Filters am Gehäuse beim Anordnen des Filters im Gehäuse entlang einer Erstreckungsrichtung des Gehäuses in jene Ausnehmung eingeführt (eingepresst), so dass sich der Filter quer zu jener Erstreckungsrichtung aufweitet (verbreitert) und daher gegen eine dem Filter zugewandte Innenseite des Gehäuses drückt, die sich entlang der Erstreckungsrichtung erstreckt und den Filter quer zu jener Erstreckungsrichtung umläuft.

Bevorzugt wird vor dem Anordnen des Filters im Gehäuse eine Dichtung im Gehäuse angeordnet, so dass jene Dichtung auf einem eine Ausströmöffnung des Gasgenerators begrenzenden Randbereich des Gehäuses zu liegen kommt. Bei der Dichtung handelt es sich insbesondere um eine geschlossen ringförmige Dichtung (sogenannter O-Ring). Durch die besagte Ausströmöffnung des Gasgenerators kann durch den Gasgenerator erzeugtes Gas aus dem Gehäuse des Gasgenerators heraus in einen den Gasgenerator umgebenden Außenraum strömen. Die besagte Ausströmöffnung kann auch einen Strömungskanal bilden, der das Gas auf mehrere mit dem Außenraum kommunizierende (eigentliche) Öffnungen des Gehäuses des Gasgenerators verteilt. Vorzugsweise wird des Weiteren eine Drossel derart ins Gehäuse des Gasgenerators eingeführt, dass jene Drossel unter Zwischenlage der Dichtung auf dem besagten Randbereich der Ausströmöffnung zu liegen kommt, wobei die Drossel vorzugsweise derart im Gehäuse angeordnet wird, dass das Teil in Form eines entlang der Erstreckungsrichtung erstreckten Bolzens von der Drossel absteht.

Die dargestellten Merkmale und Vorteile der Erfindung sollen anhand der nachfolgenden Figurenbeschreibungen von Ausführungsbeispielen verdeutlicht werden. Es zeigen:
- Fig. 1:: eine schematische Schnittansicht einer ersten Ausführungsform eines erfindungsgemäßen Gasgenerators; und
- Fig. 2:: eine schematische Schnittansicht einer zweiten Ausführungsform eines erfindungsgemäßen Gasgenerators.

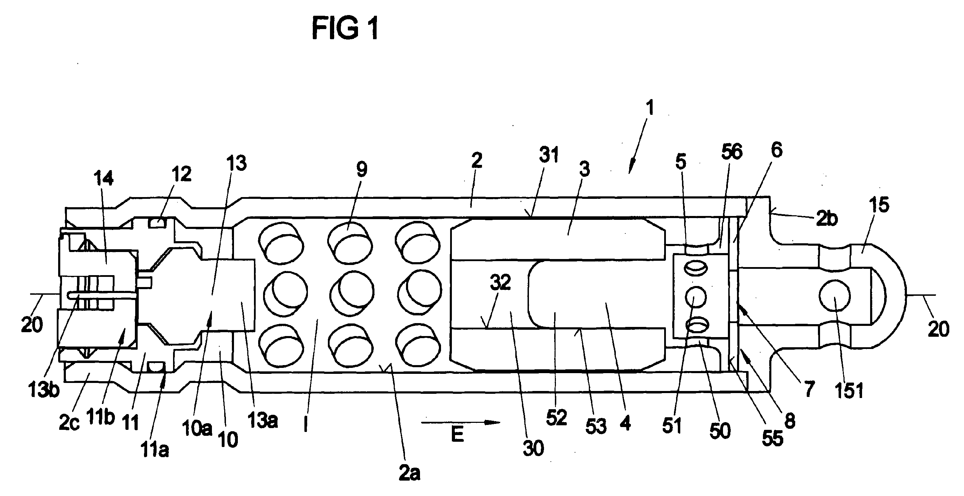

Figur 1 zeigt anhand einer schematischen Schnittansicht einen entlang einer Erstreckungsrichtung E erstreckten Gasgenerator 1 in Form eines Rohrgasgenerators. Der Gasgenerator 1 dient zum Erzeugen eines Gases, mit dem im Falle eines Crashs ein Gassack eines Airbagmoduls in oder an einem Kraftfahrzeug zum Schutz einer Person aufgeblasen werden kann.

Der Gasgenerator 1 weist ein Gehäuse 2 zum Tragen der Komponenten des Gasgenerators 1 auf. Das Gehäuse 2 ist dabei hohlzylindrisch ausgeformt und definiert einen Innenraum I des Gasgenerators 1. Die Zylinderachse 20 des Gehäuses 2 ist entlang der Erstreckungsrichtung E orientiert.

Das Gehäuse 2 weist eine dem Innenraum I zugewandte Innenseite 2a auf, die in einer senkrecht zur Zylinderachse 20 gelegenen Ebene geschlossen umläuft.

An einer quer zur Erstreckungsrichtung E bzw. Zylinderachse 20 verlaufenden Stirnseite 2b des Gehäuses 2 ist eine Ausströmöffnung 7 vorgesehen, durch die im Innenraum I des Gehäuses 2 erzeugtes Gas in einen das Gehäuse 2 umgebenden Außenraum strömen kann.

Dabei kommuniziert jene Ausströmöffnung 7 mit einer Mehrzahl von Öffnungen 151 eines Diffusors 15 des Gehäuses 2, der an der Stirnseite 2b des Gasgenerators 1 vorgesehen ist. Durch diese Öffnungen 151 strömt aus der Ausströmöffnung 7 entweichendes Gas aus dem Gasgenerator 1 (Gehäuse 2) heraus, wobei jene Öffnungen 151 so angeordnet sind, dass das Gas möglichst impulsneutral aus dem Gehäuse 2 des Gasgenerators 1 ausströmt.

Zum Aufblasen eines nicht gezeigten Gassackes können die Öffnungen 151 geeignet bezüglich des Gassackes angeordnet werden. Vorzugsweise werden die Öffnungen 151 bzw. der Diffusor 15 in einem Innenraum eines aufzublasenden Gassackes angeordnet.

Die Ausströmöffnung 7 wird durch einen Randbereich 8 begrenzt, der sich in einer senkrecht zur Erstreckungsrichtung E verlaufenden Ebene erstreckt und entlang jener Ebene ringförmig umläuft.

Zum Abdichten der Ausströmöffnung 7 ist eine entlang der Erstreckungsrichtung E elastisch vorspannbare Dichtung 6 vorgesehen, mit einer Durchgangsöffnung, die zur Ausströmöffnung 7 des Gehäuses 2 deckungsgleich ausgebildet ist. Die Dichtung 6 liegt flächig auf dem besagten Randbereich 8 auf.

Der Gasgenerator 1 weist des Weiteren eine Drossel 5 mit einer Wandung 56 auf, die quer zur Erstreckungsrichtung E umläuft und zur Innenseite 2a des Gehäuses 2 beabstandet angeordnet ist (in einer senkrecht zur Erstreckungsrichtung E verlaufenden Ebene). Die besagte Wandung 56 weist einen der Dichtung 6 zugewandten umlaufenden Randbereich 55 auf, über den die Drossel 5 auf dem Randbereich 8 des Gehäuses 2 aufliegt, und zwar unter Zwischenlage der Dichtung 6.

Die Drossel 5 weist eine Mehrzahl von Drosselöffnungen 51 auf, die an der besagten Wandung 56 ausgebildet sind. Zwischen den Drosselöffnungen 51 und der Ausströmöffnung 7 besteht dabei eine Strömungsverbindung, so dass im Innenraum I des Gehäuses 2 erzeugtes Gas durch die Drosselöffnungen 51 über die Ausströmöffnung 7 und die Öffnungen 151 des Diffusors 15 in den Außenraum gelangen kann.

Um das besagte Gas zu filtern, ist ein Filter 3 vorgesehen. Dieser ist hohlzylindrisch ausgebildet und weist eine entlang der Erstreckungsrichtung E bzw. entlang der Zylinderachse 22 verlaufende Ausnehmung in Form einer zylindrischen Durchgangsöffnung 30 auf, deren Zylinderachse mit der Zylinderachse 20 des Gehäuses 2 zusammenfällt. Der Filter 3 weist weiterhin eine Außenseite 32 auf, die der Innenseite 2a des Gehäuses 2 zugewandt ist.

Der Filter 3 wird nun so im Innenraum I des Gasgenerators 1 angeordnet, dass ein von der Drossel 5 in Richtung auf den Filter 3 abragendes Teil 4 in Form eines Bolzens, das einstückig an die Drossel 5 angeformt sein kann, entlang der Erstreckungsrichtung E bzw. der Zylinderachse 20 in die Ausnehmung 30 des Filters 3 eingeführt wird, wobei jener Bolzen 4 den Filter 3 - dessen Außenseite 32 bei nicht eingeführten Bolzen 4 mit Spiel zur Innenseite 2a im Innenraum I angeordnet ist - quer zur Erstreckungsrichtung E verbreitert, so dass der Filter 3 mit seiner Außenseite 32 durch den Bolzen 4 gegen die Innenseite 2a des Gehäuses 2 gedrückt wird. Dabei liegt eine der Innenseite 2a des Gehäuses 2 zugewandte Außenseite 53 des Bolzens 4 eng an einer die Ausnehmung 30 begrenzenden Innenseite 32 des Filters 3 an. Hierdurch wird der Filter 3 im Gehäuse 2 festgelegt.

Gleichzeitig wird hierdurch der Randbereich 55 der Wandung 56 gegen die Dichtung 6 gedrückt und die Ausströmöffnung 7 abgedichtet.

Der Treibstoff 9 des Gasgenerators 1 wird im Innenraum I des Gehäuses 2 in Bezug auf die Erstreckungsrichtung E zwischen dem Filter 3 und einer Dämpfungsscheibe 10 angeordnet, die den Treibstoff 9 gegen den Filter 3 vorspannt oder durch den Treibstoff 9 nicht belegtes Volumen des Innenraumes I des Gehäuses 2 ausfüllt.

Der Treibstoff 9 wird mittels eines Zünders 13 gezündet, der mittels einer geeigneten fahrzeugseitigen Elektronik aktivierbar ist. Der Zünder 13 durchgreift dabei mit einem freien Endbereich 13a eine Durchgangsöffnung 10a der Dämpfungsscheibe 10, so dass der Treibstoff 9 an jenem freien Endbereich 13a des Zünders 13 anliegt.

Der Zünder 13 wird durch einen Halteelement 11 gehalten, dass mit einem freien Endabschnitt 2b des Gehäuses 2, der dem Diffusor 15 entlang der Erstreckungsrichtung E gegenüberliegt verkrimpt ist. Zum Abdichten des Gehäuses 2 an jenem freien Endabschnitt 2c ist ein Dichtungselement 12 vorgesehen, dass in einer am Halteelement 11 umlaufenden Nut 11a angeordnet ist und gegen die Innenseite 2a des Gehäuses 2 sowie gegen das Halteelement 11 vorgespannt ist.

Der Zünder 13 weist des Weiteren elektrische Kontakte 13b zum Aktivieren des Zünders 13 auf, die durch eine Durchgangsöffnung 11 b des Halteelementes 11 aus dem Innenraum I des Gehäuses 2 herausgeführt sind. Zum Abdichten jener Durchgangsöffnung 11 b des Haltelementes 11 ist eine Dichtmittel 14 vorgesehen, dass in einer entsprechenden Ausnehmung des Halteelementes 11 sitzt.

Bei dem in der Figur 1 gezeigten Gasgenerator 1 ist der Filter 3 lediglich mit dem Bolzen 4 verpresst. D.h., lediglich der besagte Bolzen 4 ist in der Ausnehmung 30 des Filters 3 angeordnet, die Drossel 5 steht samt Wandung 56 entlang der Erstreckungsrichtung E vom Filter 3 ab und zwar in Richtung auf den Diffusor 15 bzw. die Ausströmöffnung 7.

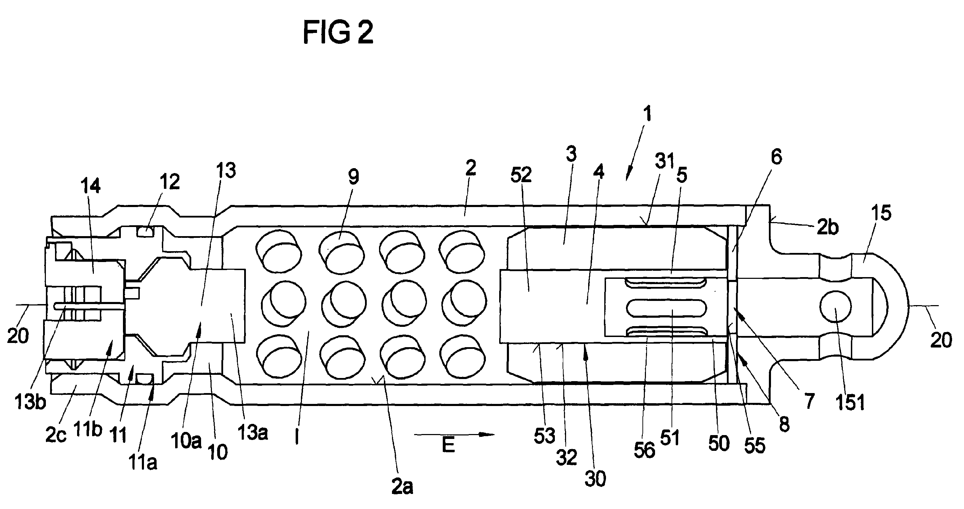

Demgegenüber ist bei dem Ausführungsbeispiel gemäß Figur 2 im Unterschied zur Figur 1 die aus dem Bolzen 4 und der Drossel 5 gebildete Einheit als ein Zylinder mit einheitlichen Außendurchmesser ausgeformt, wobei der Bolzen 4 und die Drossel 5 vollständig in der Ausnehmung 30 des Filters 3 angeordnet sind.

Bei der Herstellung des Gasgenerators 1 wird zunächst die Dichtung 6 in das Gehäuse 2 eingelegt, so dass sie auf dem Randbereich 8 des Gehäuses 2 zu liegen kommt. Sodann wird die Drossel 5 samt Bolzen 4 in das Gehäuse 2 eingelegt, so dass sich die Drossel 5 über den Randbereich 55 ihrer Wandung 56 an der Dichtung 6 abstützt. Hiernach wird der Filter 3 wie vorstehend beschrieben auf den Bolzen 4 bzw. den Bolzen 4 und die Drossel 5 gepresst, wobei die Dichtung 6 gegen den Randbereich 8 des Gehäuses 2 und den Randbereich 55 der Wandung 56 vorgespannt wird und der Filter 3 mit dem Gehäuse 2 verklemmt wird.

Insbesondere ist es also auch möglich, dass vor dem Anordnen des Filters 3 im Gehäuse 2 eine Dichtung 6 im Gehäuse 2 angeordnet wird, so dass jene Dichtung 6 auf einem eine Ausströmöffnung 7 des Gasgenerators 1 begrenzenden Randbereich 8 des Gehäuses 2 aufliegt.

Weiterhin kann das Verfahren gekennzeichnet sein durch ein Anordnen einer Drossel 5 im Gehäuse 2, so dass die Drossel 5 unter Zwischenlage der Dichtung 6 an dem besagten Randbereich 8 anliegt.

## Patentansprüche

1. Gasgenerator, mit:
- einem Gehäuse (2), und
- einem im Gehäuse (2) festgelegten Filter (3) zum Filtern mit dem Gasgenerator (1) erzeugbarer Gase, wobei
- zum Festlegen des Filters (3) im Gehäuse (2) ein Teil (4) des Gasgenerators (1) in eine Ausnehmung (30) des Filters (3) eingeführt ist;
**dadurch gekennzeichnet,**
**dass** das Teil (4) dazu eingerichtet und vorgesehen ist, den Filter (3) aufzuweiten, so dass der Filter (3) zum Festlegen des Filters (3) im Gehäuse (2) gegen das Gehäuse (2) gedrückt wird, wobei das besagte Teil (4) des Gasgenerators (1) als ein Bolzen ausgebildet ist.

2. Gasgenerator nach Anspruch 1, **dadurch gekennzeichnet, dass** der Filter (3) das Teil (4) des Gasgenerators (1) umgreift.

3. Gasgenerator nach einem der vorhergegangenen Ansprüche, **dadurch gekennzeichnet, dass** der Bolzen (4) von einer im Gehäuse (1) angeordneten Drossel (5) des Gasgenerators (1) absteht.

4. Gasgenerator nach Anspruch 3, **dadurch gekennzeichnet, dass** der Bolzen (4) einstückig an die Drossel (5) angeformt ist.

5. Gasgenerator nach einem der vorhergehenden Ansprüche, **dadurch gekennzeichnet, dass** das Gehäuse (2) entlang einer Erstreckungsrichtung (E) erstreckt ist.

6. Gasgenerator nach den Ansprüchen 3 und 5, **dadurch gekennzeichnet, dass** der Bolzen (4) entlang der Erstreckungsrichtung (E) von der Drossel (5) absteht.

7. Gasgenerator nach Anspruch 5 oder 6, **dadurch gekennzeichnet, dass** das Gehäuse (2) zumindest abschnittsweise als ein Hohlzylinder mit einer mit der Erstreckungsrichtung (E) zusammenfallenden Zylinderachse (20) ausgebildet ist.

8. Gasgenerator nach einem der vorhergehenden Ansprüche, **dadurch gekennzeichnet, dass** die Ausnehmung (30) als eine Durchgangsöffnung ausgebildet ist.

9. Gasgenerator nach den Ansprüchen 5 und 8, **dadurch gekennzeichnet, dass** die Durchgangsöffnung (30) mit der Erstreckungsrichtung (E) fluchtet.

10. Gasgenerator nach einem der vorhergehenden Ansprüche, **dadurch gekennzeichnet, dass** der Filter (3) zumindest abschnittsweise als ein Hohlzylinder ausgebildet ist.

11. Gasgenerator nach den Ansprüchen 7 und 10, **dadurch gekennzeichnet, dass** der Hohlzylinder des Filters (3) eine Zylinderachse (20) aufweist, die mit der Zylinderachse (20) des Gehäuses (2) zusammenfällt.

12. Gasgenerator nach Anspruch 5 oder einem der Ansprüche 6 bis 11 soweit rückbezogen auf Anspruch 5, **dadurch gekennzeichnet, dass** der Filter (3) den Bolzen (4) in einer quer zur Erstreckungsrichtung (E) verlaufenden Ebene umgibt.

13. Gasgenerator nach Anspruch 3 und nach Anspruch 5 oder einem der Ansprüche 6 bis 12 soweit rückbezogen auf Anspruch 5, **dadurch gekennzeichnet, dass** der Filter (3) den Bolzen (4) und die damit verbundene Drossel (5) in einer quer zur Erstreckungsrichtung (E) verlaufenden Ebene umgibt.

14. Verfahren zur Herstellung eines Gasgenerators, insbesondere nach einem der vorhergehenden Ansprüche, umfassend die Schritte:
- Bereitstellen eines Gehäuses (2) des Gasgenerators (1), und
- Anordnen eines Filters (3) zum Filtern mit dem Gasgenerator (1) erzeugbarer Gase im Gehäuse (2) derart, dass ein Teil (4) des Gasgenerators (1) in eine Ausnehmung (30) des Filters (3) eingeführt wird, um den Filter (3) im Gehäuse (2) festzulegen, wobei das Teil (4) des Gasgenerators (1) zum Festlegen des Filters (3) im Gehäuse (2) entlang einer Erstreckungsrichtung (E) des Gehäuses (2) in jene Ausnehmung (30) eingeführt wird, so dass sich der Filter (3) quer zu jener Erstreckungsrichtung (E) aufweitet und gegen eine dem Filter (3) zugewandte Innenseite (21) des Gehäuses (2) drückt.

15. Verfahren nach Anspruch 14, **dadurch gekennzeichnet, dass** eine Drossel (5) derart im Gehäuse (2) angeordnet wird, dass das Teil (4) in Form eines entlang der Erstreckungsrichtung (E) erstreckten Bolzens entlang der Erstreckungsrichtung (E) von der Drossel (5) absteht.

## Claims

1. Gas generator, comprising:
- a housing (2), and
- a filter (3) fastened in the housing (2) for filtering gases that can be generated by the gas generator, wherein
- a part (4) of the gas generator (1) is inserted into a recess (30) of the filter (3) for fastening the filter (3) in the housing;
**characterized in that**
the part (4) is configured and provided to widen the filter (3), so that the filter (3) is pressed against the housing (2) for fastening the filter (3) in the housing (2), wherein said part (4) of the gas generator (1) is formed as a bolt.

2. Gas generator according to claim 1, **characterized in that** the filter (3) encompasses the part (4) of the gas generator (1).

3. Gas generator according to one of the preceding claims, **characterized in that** the bolt (4) protrudes from a throttle (5) of the gas generator (1) arranged in the housing (1).

4. Gas generator according to claim 3, **characterized in that** the bolt (4) is integrally formed with the throttle (5).

5. Gas generator according to one of the preceding claims, **characterized in that** the housing (2) extends along an extension direction (E).

6. Gas generator according to claims 3 and 5, **characterized in that** the bolt (4) protrudes along the extension direction (E) from the throttle (5).

7. Gas generator according to claim 5 or 6, **characterized in that** the housing (2) is formed at least in sections as a hollow cylinder having a cylinder axis (20) coinciding with the extension direction (E).

8. Gas generator according to one of the preceding claims, **characterized in that** the recess (30) is formed as a through-opening.

9. Gas generator according to the claims 5 and 8, **characterized in that** the through-opening (30) aligns with the extension direction (E).

10. Gas generator according to one of the preceding claims, **characterized in that** the filter (3) is formed at least in sections as a hollow cylinder.

11. Gas generator according to claims 7 and 10, **characterized in that** the hollow cylinder of the filter (3) comprises a cylinder axis (20), which coincides with the cylinder axis (20) of the housing (2).

12. Gas generator according to claim 5 or one of the claims 6 to 11 when referred back to claim 5, **characterized in that** the filter (3) surrounds the bolt (4) in a plane running across the extension direction (E).

13. Gas generator according to claim 3 and according to claim 5 or one of the claims 6 to 12 when referred back to claim 5, **characterized in that** the filter (3) surrounds the bolt (4) and the throttle (5) connected thereto in a plane running across the extension direction (E).

14. Method for producing a gas generator, particularly according to one of the preceding claims, comprising the steps of:
- providing a housing (2) of the gas generator (1), and
- arranging a filter (3) in the housing (2) for filtering gases that can be generated by the gas generator (1), such that a part (4) of the gas generator (1) is inserted into a recess (30) of the filter (3) in order to fix the filter (3) in the housing, wherein the part (4) of the gas generator (1) is inserted into said recess (30) along an extension direction (E) of the housing (2) for fixing the filter (3) in the housing (2), so that the filter (3) widens across said extension direction (E) and pushes against an inside (21) of the housing (2) facing the filter (3).

15. Method according to claim 14, **characterized in that** a throttle (5) is arranged in the housing (2) such that the part (4) protrudes along the extension direction (E) from the throttle (5) in the form of a bolt (4) extending along the extension direction (E).

## Revendications

1. Générateur de gaz comprenant :
- un boîtier (2), et
- un filtre (3) fixé dans le boîtier (2) pour la filtration de gaz pouvant être générés avec le générateur de gaz (1), dans lequel
- pour la fixation du filtre (3) dans le boîtier (2), une partie (4) du générateur de gaz (1) est introduite dans un évidement (30) du filtre (3) ;
**caractérisé en ce**
**que** la partie (4) est aménagée et prévue pour élargir le filtre (3) de sorte que le filtre (3) appuie contre le boîtier (2) pour la fixation du filtre (3) dans le boîtier (2), ladite partie (4) du générateur de gaz (1) étant réalisée sous la forme d'un axe.

2. Générateur de gaz selon la revendication 1, **caractérisé en ce que** le filtre (3) vient en prise autour de la partie (4) du générateur de gaz (1).

3. Générateur de gaz selon l'une quelconque des revendications précédentes, **caractérisé en ce que** l'axe (4) s'étend depuis un papillon (5) disposé dans le boîtier (1) du générateur de gaz (1).

4. Générateur de gaz selon la revendication 3, **caractérisé en ce que** l'axe (4) est formé d'un seul tenant sur le papillon (5).

5. Générateur de gaz selon l'une quelconque des revendications précédentes, **caractérisé en ce que** le boîtier (2) s'étend le long d'une direction d'extension (E).

6. Générateur de gaz selon les revendications 3 et 5, **caractérisé en ce que** l'axe (4) s'étend depuis papillon (5) le long de la direction d'extension (E).

7. Générateur de gaz selon la revendication 5 ou 6, **caractérisé en ce que** le boîtier (2) est réalisé au moins par portions sous la forme d'un cylindre creux avec un axe de cylindre (20) coïncidant avec la direction d'extension (E).

8. Générateur de gaz selon l'une quelconque des revendications précédentes, **caractérisé en ce que** l'évidement (30) est réalisé sous la forme d'une ouverture de passage.

9. Générateur de gaz selon les revendications 5 et 8, **caractérisé en ce que** l'ouverture de passage (30) est alignée avec la direction d'extension (E).

10. Générateur de gaz selon l'une quelconque des revendications précédentes, **caractérisé en ce que** le filtre (3) est réalisé au moins par portions sous la forme d'un cylindre creux.

11. Générateur de gaz selon les revendications 7 et 10, **caractérisé en ce que** le cylindre creux du filtre (3) présente un axe de cylindre (20) qui coïncide avec l'axe de cylindre (20) du boîtier (2).

12. Générateur de gaz selon la revendication 5 ou l'une quelconque des revendications 6 à 11, dans la mesure où elle dépend de la revendication 5, **caractérisé en ce que** le filtre (3) entoure l'axe (4) dans un plan s'étendant transversalement à la direction d'extension (E).

13. Générateur de gaz selon la revendication 3 et selon la revendication 5 ou l'une quelconque des revendications 6 à 12, dans la mesure où elle dépend de la revendication 5, **caractérisé en ce que** le filtre (3) entoure l'axe (4) et le papillon (5) relié à celui-ci dans un plan s'étendant transversalement à la direction d'extension (E).

14. Procédé de fabrication d'un générateur de gaz en particulier selon l'une quelconque des revendications précédentes, comprenant les étapes consistant à :
- mettre à disposition un boîtier (2) du générateur de gaz (1), et
- disposer un filtre (3) pour la filtration de gaz pouvant être générés avec le générateur de gaz (1) dans le boîtier (2) de telle manière qu'une partie (4) du générateur de gaz (1) est introduite dans un évidement (30) du filtre (3) afin de fixer le filtre (3) dans le boîtier (2), la partie (4) du générateur de gaz (1) étant introduite pour la fixation du filtre (3) dans le boîtier (2) le long d'une direction d'extension (E) du boîtier (2) dans cet évidement (30) de sorte que le filtre (3) s'élargisse transversalement à cette direction d'extension (E) et appuie contre une face intérieur (21) du boîtier (2) orientée vers le filtre (3).

15. Procédé selon la revendication 14, **caractérisé en ce qu'**un papillon (5) est disposé dans le boîtier (2) de telle manière que la partie (4) en forme d'axe s'étendant le long de la direction d'extension (E) s'étende depuis le papillon (5) le long de la direction d'extension (E).
